# EUROPÄISCHE PATENTANMELDUNG

(11) **EP 3 456 569 A1**
(43) Veröffentlichungstag der Anmeldung: **20.03.2019**
(21) Anmeldenummer: 17191397.3
(22) Anmeldetag: 15.09.2017
(51) Int. Cl.: B60K 1/04, B60K 7/00, B60K 1/00

(54) **ANORDNUNG VON BATTERIEGEHÄUSEN BEI SCHWERLASTFAHRZEUGEN**

(71) Anmelder: Siemens Aktiengesellschaft, 80333 München (DE)
(72) Erfinder: Becker, Norbert, 91341 Röttenbach (DE)

(57) **Zusammenfassung**

Die Erfindung betrifft ein Minenfahrzeug, insbesondere Muldenkipper (1) mit:
zumindest zwei Radsatzpaaren, wobei die Räder (5) eines Radsatzpaares sich gegenüberliegen, und wobei zumindest die Räder (5) eines Radsatzes durch ein elektrisches Antriebssystem einzeln antreibbar sind,
zumindest einem Speicher für elektrische Energie, der sich zwischen den Rädern (5) eines Radsatzes und/oder axial zwischen den Radsätzen und/oder unterhalb einer, insbesondere beweglichen Transporteinheit (6) befindet.

## Beschreibung

Die Erfindung betrifft Minenfahrzeuge, insbesondere Muldenkipper mit zumindest einem elektrischen Antriebssystem.

Bei Minenfahrzeugen, Muldenkippern oder auch Mining-Trucks genannt, werden die Räder dieselmechanisch oder dieselelektrisch angetrieben.

Der Erfindung liegt die Aufgabe zugrunde, Minenfahrzeuge, insbesondere Muldenkipper mit zumindest einem elektrischen Antriebssystem auszustatten, wobei das Antriebssystem autark betreibbar ist und einen kompakten Aufbau des Minenfahrzeugs gewährleistet.

Erfindungsgemäß gelingt die Lösung der gestellten Aufgabe durch ein Minenfahrzeug, insbesondere Muldenkipper mit: zumindest zwei Radsatzpaaren, wobei die Räder eines Radsatzpaares sich gegenüberliegen, und wobei zumindest die Räder eines Radsatzes durch ein elektrisches Antriebssystem einzeln antreibbar sind,
zumindest einem Speicher für elektrische Energie, der sich zwischen den Rädern eines Radsatzes und/oder axial zwischen den Radsätzen und/oder unterhalb einer, insbesondere beweglichen Transporteinheit befindet.

Als elektrische Speicher werden vor allem Supercaps oder Batterien in den dafür geeigneten Einbauorten vorgesehen. Dabei eignen sich vor allem elektrische Speicher, die für die Minenanwendungen relevanten Eigenschaften aufweisen, wie geringe Selbstentladung, hohe Ladezyklen, hohe Energiedichte etc.

Unter einer Transporteinheit wird beispielsweise ein Kipper oder eine Schaufel eines Radladers verstanden.

Es wird somit erfindungsgemäß ein Speichersystem für ein elektrisches Antriebssystem vorgesehen, das im und/oder am Minenfahrzeug angeordnet elektrische Speicher, wie Supercaps, Batterien aller Art aufweist, die elektrische Energie für zumindest einen elektrischen Antrieb des Minenfahrzeugs bereitstellen.

Die Anordnung dieses oder dieser elektrischen Speicher erfolgt beispielsweise in der Vorder- und/oder Hinterachse im Achskörper und wird dabei um ggf. vorhandene und/oder für den Betreib notwendige, an sich bekannten weiteren Antriebsmodule, wie Differentiale, Kardanwellen etc. angeordnet.

Vor allem wenn der Speicher im Achskörper also zwischen den Rädern einer Achse angeordnet ist, übernimmt das Gehäuse, also die Kapselung des Achskörpers gleichzeitig die Schutzfunktion, so dass Umwelteinflüsse, wie Feuchtigkeit und/oder Stabbelastungen von dem Speicher ferngehalten werden.

Die Kapselung weist kann unabhängig vom Einbauort am Fahrzeug ergänzend neben dem mechanischen Schutz ebenso eine Isolierung und/oder gar einen Kühlmantel aufweisen, um die Temperatureinflüsse auf den elektrischen Speicher zu minimieren.

Der Achskörper bzw. dessen Kapselung trägt bei einem Einbauort zwischen den Rädern und/oder Achsen nur das Minenfahrzeug selbst, plus eventuelle Zuladungen. Der Achskörper bzw. dessen Kapselung bietet außerdem für den elektrischen Speicher gleichzeitig auch einen mechanischen Schutz. In einem nicht auszuschließenden Störfall im Bereich des elektrischen Speichers gewährleistet die Kapselung im Achskörper eine gezielte und örtlich begrenzte Bekämpfung, beispielsweise eines Brandes und kann so die Ausbreitung von Folgeschäden auf das Fahrzeug unterbinden.

Um die Eindämmung ein Störfalls zu erhalten, kann auch der elektrische Speicher auf mögliche Einbauorte am Fahrzeug verteilt angeordnet sein, so dass jeder Einbauort im nicht auszuschließenden Störfall separat bekämpft werden kann.

Die Kapselung ist außerdem durch geeignete Maßnahmen, z.B. einer Isolierung oder aktiven Kühlung/Heizung für Temperierungszwecke des Speichers unabhängig vom Einbauort geeignet.

Außerdem wird durch Anordnung der elektrischen Speicher im Achskörper, also zwischen den Rädern eines Radsatzes der Schwerpunkt des Minenfahrzeugs positiv beeinflusst und wandert demnach nach unten, was die Traktion des Fahrzeugs verbessert.

Das zusätzliche Gewicht dieses elektrischen Speichers muss somit nicht vom Fahrzeugrahmen und weiteren Fahrwerkskomponenten getragen werden.

Die erfinderische Anordnung der elektrischen Speicher von elektrisch angetriebenen Minenfahrzeugen eignet sich sowohl für technische Konzepte dieser Minenfahrzeuge mit Vierradantrieb als auch für Hybridelektroantriebe, des Weiteren auch für voll elektrisch betriebene Minenfahrzeuge. Die voll elektrisch betriebenen Minenfahrzeuge können dabei autark nur über den oder die elektrischen Speicher am Fahrzeug oder in Verbindung mit elektrischen Oberleitungen betreiben werden, wobei mit Oberleitungen der elektrische Speicher als Puffer und/oder Booster des Antriebssystems fungiert.

Eine Regelung bzw. Speicher-Managementsystem überwacht u.a. den Ladezustand des elektrischen Speichers oder der elektrischen Speicher eines Fahrzeugs und setzt dementsprechende Meldungen an einen Fahrzeugführer oder über eine cloud beispielsweise des Minenbetreibers an eine übergeordnete Zentrale ab. Dies wird mit dem vor dem Fahrzeug liegenden Anforderungsprofil (z.B. Lademenge) und/oder Belastungsprofil (z.B. Relief der Mine) verglichen und daraus die Notwendigkeit einer Aufladung bzw. eines Speichwechsels festgelegt.

Diese Ausführung ist vor allem für fahrerlose Minenfahrzeuge besonders vorteilhaft.

In einer weiteren Ausführungsform kann der elektrische Speicher, z.B. die Batterie auch im Deckbereich des Fahrzeugs installiert werden, wobei je nach Einbauraum die dementsprechende Speicherkapazitäten begrenzt sind und sich der Schwerpunkt des Fahrzeugs durch die Anordnung nach oben verlagert, was sich ggf. im Fahrverhalten eines Minenfahrzeugs negativ auswirkt.

In einer weiteren Ausführung sind unterschiedliche elektrische Speicher an unterschiedlichen Einbauorten des Minenfahrzeugs angeordnet. So befindet sich beispielsweise ein "schneller" Speicher, in Form von Supercaps zwischen den Rädern, wobei die etwas trägeren Speicher - ggf. mit höherer Speicherkapazität wie Batterien - sich zwischen den Achsen und/oder dem Deckbereich befinden. Auch in diesem Fall wird ein Speicher-Management-System dafür Sorge tragen, dass die angeforderten Fahrleistungen des Antriebssystems, sei es aufgrund der Beladung und/oder der Streckenführung zur Verfügung stehen.

Die Erfindung sowie weitere vorteilhafte Ausgestaltungen der Erfindung werden anhand eines Ausführungsbeispiels näher erläutert. Darin zeigen:
- FIG 1: einen Muldenkipper,
- FIG 2: einen Detailausschnitt eines Radsatzes.

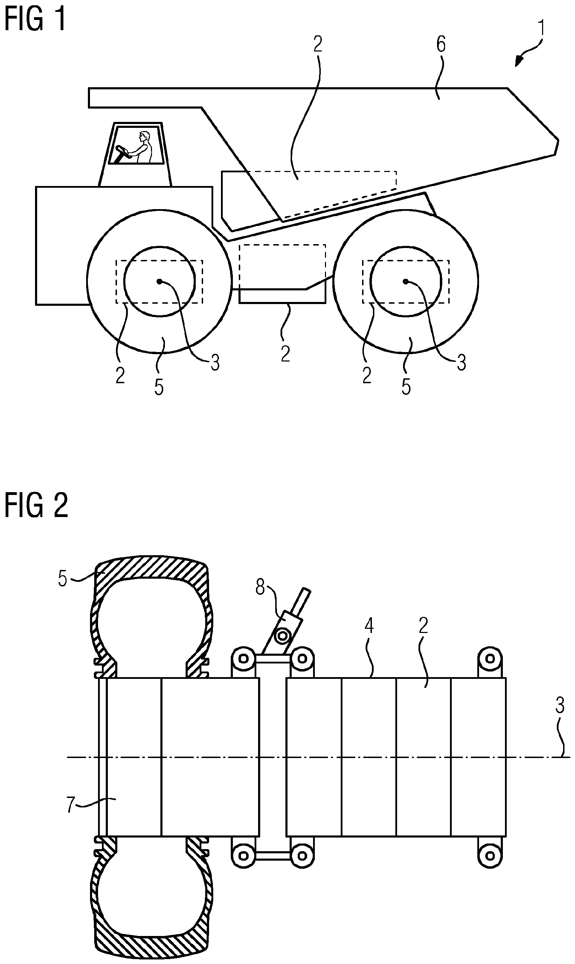

FIG 1 zeigt einen Muldenkipper 1 mit einem Kipper 6, der Schüttgurt transportiert und zwei Radsatzpaaren, wobei die Räder 5 zumindest eines Radsatzpaares durch eine Achse 3 verbunden sind. Ebenso sind vier mechanisch voneinander unabhängig angeordnete Räder 5 vorstellbar, die jeweils separat antreibbar sind.

Zwischen den Rädern 5 eines Radsatzpaares befindet sich zumindest ein Achskörper 4. Jedes Rad 5 kann dabei als Rad mit einem Reifen oder mit Zwillingsreifen ausgeführt sein.

Ebenso kann der Muldenkipper 1 mit Fahrer oder als fahrerloses Fahrzeug ausgeführt sein.

Um bei einem elektrisch angetriebenen Muldenkipper 1 nunmehr eine dementsprechend elektrische Energie bereitstellen zu können, muss diese von einem dieselelektrischen System oder einer Oberleitung zur Verfügung gestellt werden. Um das Fahrzeug autark agieren lassen zu können, ist es sinnvoll die elektrische Energie - vor allem für den oder die Antriebe aus einem oder mehreren dementsprechenden Speichern zur Verfügung stellen zu können. Dabei eignen sich vor allem Supercaps oder Batterien, die in einem dementsprechenden Gehäuse, insbesondere einer Kapselung untergebracht ist.

Die Kapselung kann außerdem durch geeignete Maßnahmen, z.B. einer zusätzlichen Isolierung oder aktiven Kühlung/Heizung in Form eines Kühl- oder Heizmantels für Temperierungszwecke des Speichers ausgelegt sein.

Als Einbauorte 2 eines Speichers z.B. einer Batterie mit ihrem Batteriegehäuse eignen sich, wie FIG 1 zeigt, nunmehr beispielsweise die Bereiche zwischen den Räder 5 eines Radsatzpaares, also im Achskörper 4, ebenso wie zwischen den hintereinander angeordneten Rädern 5 unterschiedlicher Radsatzpaare, also zwischen den Rädern 5 im Mittelbereich eines Muldenkippers 1, oder auch unterhalb des Kippers, also der beweglichen Transporteinheit oder auch im Bereich der Fahrerkabine, insbesondere bei fahrerlosen Muldenkippern 1.

FIG 2 zeigt in einer Detaildarstellung einen Achskörper 4 der mit dementsprechenden mechanischen Verbindungselementen beispielsweise Achsschenkeln 8 mit einer Antriebseinheit 7 mechanisch verbunden ist. Die Antriebseinheit 7 ist mit dem elektrischen Speicher z.B. der Batterie im Achskörper 4 elektrisch verbunden. Bei der Antriebseinheit im Rad 5 handelt es sich vorzugsweise um einen Radnabenantrieb, der als Einzelradantrieb ausgeführt ist. Dabei kann ein nicht näher dargestellter Umrichter ebenso im Achskörper 4 oder den anderen Einbauorten untergebracht sein.

Für den Betrieb des Antriebsystems im Minenfahrzeug ist es vorteilhaft, wenn die Nennspannung vergleichsweise hoch ist; beispielsweise zwischen 300 und 1500 V um die, für die notwendige Leistungen erforderlichen Ströme möglichst gering zu halten. Dies ist selbstverständlich mit einem dementsprechenden Isolationsaufwand der elektrischen Betriebsmittel des Antriebssystems verbunden.

Selbstverständlich sind auch niedrigere Betriebsspannung als 300 Volt oder sogar höhere Betriebsspannungen als 1500 Volt unter Berücksichtigung der jeweiligen Vor- und Nachteile möglich.

Derartige Anordnungen der elektrischen Speicher von elektrischen Antriebssystemen eigenen sich auch für andere Schwerlastfahrzeuge außerhalb von Minen, wie auf öffentlichen Straßen verkehrende Lastkraftwagen und Traktoren.

## Patentansprüche

1. Minenfahrzeug, insbesondere Muldenkipper (1) mit:
zumindest zwei Radsatzpaaren, wobei die Räder (5) eines Radsatzpaares sich gegenüberliegen, und wobei zumindest die Räder (5) eines Radsatzes durch ein elektrisches Antriebssystem einzeln antreibbar sind,
zumindest einem Speicher für elektrische Energie, der sich zwischen den Rädern (5) eines Radsatzes und/oder axial zwischen den Radsätzen und/oder unterhalb einer, insbesondere beweglichen Transporteinheit (6) befindet.

2. Minenfahrzeug nach Anspruch 1, **dadurch gekennzeichnet, dass** sich der Speicher in einem Achskörper (4) zwischen den Rädern (5) eines Radsatzpaares befindet.

3. Minenfahrzeug nach einem der vorhergehenden Ansprüche, **dadurch gekennzeichnet, dass** der Speicher durch eine übergeordnete Regelung bzgl. seines Ladezustandes direkt am Fahrzeug und/oder über eine cloud überwachbar ist.

4. Minenfahrzeug nach einem der vorhergehenden Ansprüche, **dadurch gekennzeichnet, dass** der Achskörper (4) Rippen zur Kühlung des Speichers und zur Stabilisierung des Achskörpers (4) aufweist.

5. Minenfahrzeug nach einem der vorhergehenden Ansprüche, **dadurch gekennzeichnet, dass** der Speicher für elektrische Energie als Supercap oder elektrochemischer Speicher ausgeführt ist.

6. Minenfahrzeug nach einem der vorhergehenden Ansprüche, **dadurch gekennzeichnet, dass** der elektrische Speicher eine Nennspannung an seinen Klemmen von 300 bis zu 1,5 KV bereitstellt.

7. Minenfahrzeug nach einem der vorhergehenden Ansprüche, **dadurch gekennzeichnet, dass**, um einen kontinuierlichen Einsatz des Minenfahrzeugs zu gewährleisten der Speicher austauschbar gegenüber einem geladenen Speicher ist.
